# FASCICULE DE BREVET EUROPEEN

(11) **EP 1 699 714 B1**
(45) Date de publication et mention de la délivrance du brevet: **30.05.2007**
(21) Numéro de dépôt: 04821082.7
(22) Date de dépôt: 26.11.2004
(51) Int. Cl.: B65G 17/38

(54) **DISPOSITIF DE TRANSFERT DE PREFORMES COMPORTANT DES PLATINES MOULEES**
GIESSPLATTEN UMFASSENDE VORRICHTUNG ZUR ÜBERTRAGUNG VON VORFORMLINGEN
DEVICE FOR TRANSFERRING PREFORMS COMPRISING CAST PLATES

(30) Priorité: 19.12.2003 FR 0351120
(43) Date de publication de la demande: 13.09.2006
(73) Titulaire: SIDEL PARTICIPATIONS, 76930 Octeville-sur-Mer (FR)
(72) Inventeur: BENICH, Yvan, 76930 Octeville Sur Mer (FR)
(74) Mandataire: Kohn, Philippe
(86) Numéro de dépôt international: PCT/EP2004/053118
(87) Numéro de publication internationale: WO 2005/068329

(56) Documents cités:
- EP-B- 0 935 572
- FR-A- 2 728 547
- GB-A- 767 567

## Description

L'invention concerne un dispositif de transfert.

L'invention concerne plus particulièrement un dispositif de transfert, notamment de transfert de préformes pour la fabrication de récipients par soufflage, comportant une série de platines sur lesquelles sont fixés des moyens de support de préformes, les platines étant accouplées les unes à la suite des autres en une chaîne sans fin curviligne mobile par l'intermédiaire d'articulations propres à autoriser la curvilinéarité de la chaîne mobile ainsi que simultanément la rotation des platines autour d'un axe horizontal pour permettre le renversement et/ou le redressement des préformes.

Un tel type de dispositif de transfert est déjà connu, notamment des documents FR-A-2.728.547 et EP-B-0.935.572, qui décrivent et représentent chacun un dispositif de transfert de corps creux tels que des préformes pour la réalisation de récipients par soufflage.

Les platines qui équipent ce dispositif de transfert sont conçues pour résister à de fortes sollicitations mécaniques.

Les platines doivent, de plus, résister à de fortes sollicitations thermiques. En effet, la chaîne est destinée notamment à transporter les préformes dans un four de chauffage, en vue de réchauffer les préformes à une température supérieure à la température de transition vitreuse, avant de réaliser l'opération de soufflage.

Pour pouvoir résister à toutes ces sollicitations, chaque platine est réalisée généralement en alliage d'aluminium, par usinage.

Ce type de platine présente notamment l'inconvénient d'être très coûteux à réaliser.

En effet, une quantité importante de matière est perdue par copeaux au cours des opérations d'usinage, et un nombre important d'étapes d'usinage est nécessaire.

De plus, il est nécessaire de mettre en oeuvre des étapes de rectification, pour pouvoir respecter les tolérances de fabrication de la platine.

Un autre inconvénient des platines usinées est que les pièces obtenues sont relativement massives, ce qui ne permet pas de minimiser le pas entre deux préformes consécutives transportées par la chaîne du dispositif de transfert.

L'invention vise à remédier à ces inconvénients de manière simple, efficace, et économique.

Dans ce but, l'invention propose un dispositif de transfert du type décrit précédemment, caractérisé en ce que chaque platine est réalisée en une seule pièce par moulage.

Selon d'autres caractéristiques de l'invention :
- chaque platine a globalement la forme d'un maillon de chaîne et comporte une plaque horizontale supérieure et une plaque horizontale inférieure qui sont liées par au moins un montant sensiblement vertical, les moyens de support comportent, pour chaque platine, deux corps tubulaires qui sont fixés sur la platine, de part et d'autre du montant, et qui s'étendent verticalement à travers des trous associés formés dans les deux plaques horizontales, chaque corps tubulaire étant prévu pour recevoir intérieurement une tige verticale de support d'une préforme, et chaque platine, dite première platine, est liée à une platine adjacente, dite seconde platine, par une articulation comportant une première douille montée à rotation autour d'un corps tubulaire de la première platine et une seconde douille montée à rotation autour d'un corps tubulaire de la seconde platine, les deux douilles étant montées à pivotement, l'une par rapport à l'autre, autour d'un axe de pivotement sensiblement horizontal ;
- le montant vertical de chaque platine comporte au moins un arbre transversal qui est muni, à son extrémité libre, d'un galet fou prévu pour coopérer avec une came fixe, notamment en vue de commander le renversement et/ou le redressement des préformes ;
- chaque platine est moulée sur l'arbre transversal associé qui forme un insert ;
- les tronçons de l'arbre transversal qui sont surmoulés comportent des reliefs ou des cavités ;
- l'arbre transversal est monté à force dans la platine associée ;
- les tronçons de l'arbre qui sont reçus dans la platine comportent des stries réalisées par moletage ;
- chaque douille est réalisée en une seule pièce par moulage ;
- chaque douille est constituée de deux bagues coaxiales qui sont montées à rotation sur le corps tubulaire associé et qui sont moulées avec une portion circonférentielle de paroi axiale ;
- la portion de paroi axiale de la première douille est munie d'un roulement et la portion de paroi axiale de la seconde douille est assemblée sur la portion de paroi axiale de la première douille au moyen d'un rivet horizontal qui s'étend axialement dans le roulement de manière à former l'axe de pivotement ;
- chaque douille est montée directement à rotation sur le corps tubulaire associé, sans élément intermédiaire d'interposition radiale ;
- chaque douille est réalisée en matériau autolubrifiant tel que du laiton ;
- chaque platine et/ou chaque douille est moulée par injection sous pression ;
- chaque platine et/ou chaque douille est réalisée en Zamac ;
- chaque platine et/ou chaque douille est réalisée en alliage cuivreux.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective qui représente schématiquement une portion d'un dispositif de transfert réalisé conformément aux enseignements de l'invention ;
- la figure 2 est une vue suivant le plan de coupe 2-2 qui représente partiellement la portion du dispositif de transfert de la figure 1 ;
- la figure 3 est une vue suivant le plan de coupe 3-3 qui représente partiellement la portion du dispositif de transfert de la figure 1.

Pour la description de l'invention, on adoptera à titre non limitatif les orientations verticale, longitudinale et transversale selon le repère V, L, T indiqué aux figures.

Dans la description qui va suivre, des éléments identiques, similaires ou analogues seront désignés par les mêmes chiffres de référence.

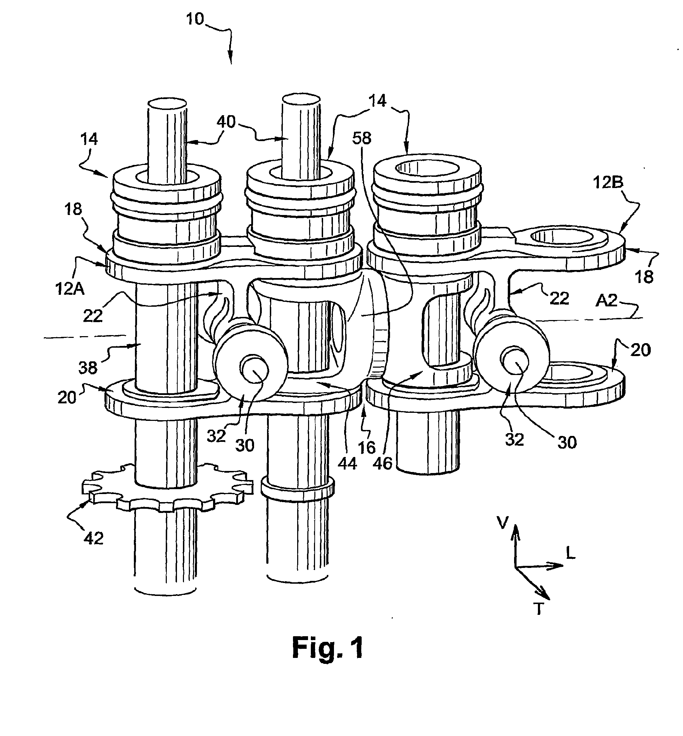

Sur la figure 1 on a représenté un dispositif de transfert 10 qui est réalisé conformément aux enseignements de l'invention.

De préférence, le dispositif de transfert 10 est utilisé pour le transport de préformes (non représentées) servant à la fabrication de récipients par soufflage.

Le dispositif de transfert 10 comporte une série de platines 12A, 12B sur lesquelles sont fixés des moyens 14 de support de préformes de sorte que chaque platine 12A, 12B puisse supporter ici deux préformes, comme on l'expliquera par la suite.

Un tel type de dispositif de transfert 10 est décrit notamment dans le document EP-B-0.935.572, déjà cité dans le préambule de la présente demande, auquel on pourra se reporter pour plus de précisions.

Les platines 12A, 12B sont prévues pour être accouplées les unes à la suite des autres en une chaîne sans fin curviligne mobile par l'intermédiaire d'articulations 16 propres à autoriser la curvilinéarité de la chaîne mobile ainsi que simultanément la rotation des platines 12A, 12B autour d'un axe horizontal de pivotement A1 pour permettre le renversement et/ou le redressement des préformes.

Dans la suite de la description, on décrira les platines 12A, 12B et l'articulation 16 dans une position stable, correspondant par exemple à une position renversée des préformes, qui s'étendent alors verticalement vers le haut.

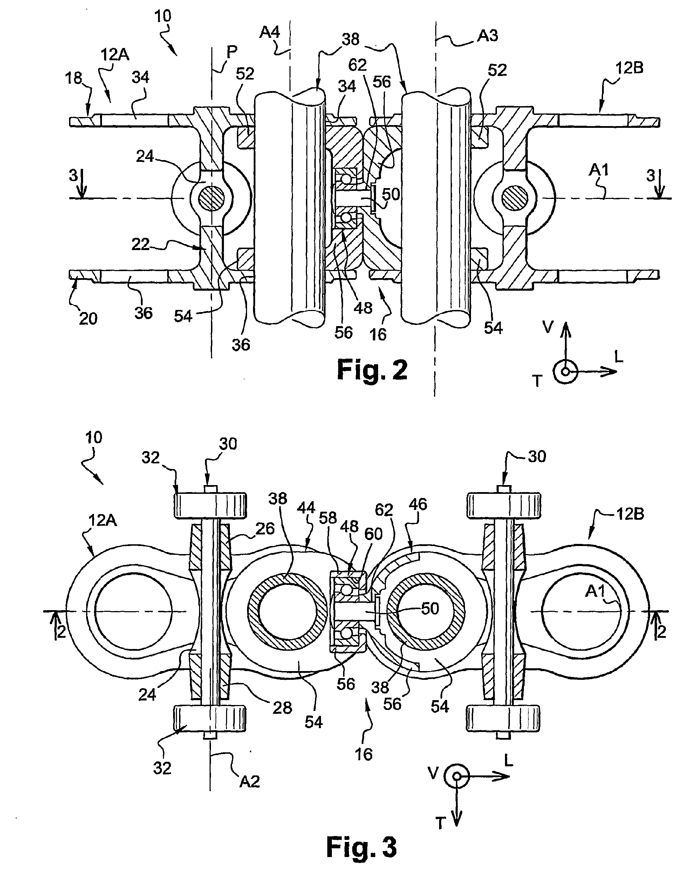

Sur les figures 1 à 3, l'axe de pivotement A1 s'étend globalement suivant une direction longitudinale.

Pour simplifier la représentation, seules une première platine 12A et une seconde platine 12B, ainsi que l'articulation 16 par laquelle elles sont accouplées, ont été représentées sur les figures 1 à 3.

Avantageusement, chaque platine 12A, 12B a globalement la forme d'un maillon de chaîne et comporte une plaque horizontale supérieure 18 et une plaque horizontale inférieure 20 qui sont liées par au moins un montant 22 sensiblement vertical.

Le montant 22 a ici la forme d'une plaque transversale verticale ajourée par une fenêtre centrale 24.

Le montant 22 comporte, transversalement de part et d'autre de la fenêtre 24, deux tronçons tubulaires transversaux 26, 28 prévus pour recevoir à fixation un arbre transversal 30.

L'arbre 30 est muni, à chacune de ses extrémités libres, d'un galet 32 qui est monté libre à rotation autour de son axe transversal A2 et qui est prévu pour coopérer avec une came fixe associée (non représentée). Par exemple, l'un des galets 32 coopère avec une came afin de commander le renversement et le redressement des préformes, et l'autre galet 32 coopère avec une autre came afin de guider la platine 12A, 12B associée, notamment dans les portions rectilignes de la chaîne.

Selon le mode de réalisation représenté ici, chaque platine 12A, 12B admet un plan transversal vertical de symétrie P qui passe par l'axe A2 de l'arbre 30 transversal.

La plaque supérieure 18 comporte deux trous verticaux 34 qui sont agencés de part et d'autre du plan de symétrie P et qui se trouvent en regard verticalement, respectivement de deux trous similaires 36 aménagés dans la plaque inférieure 20.

Chaque platine 12 comporte donc deux paires de trous 34, 36, chaque paire comportant un trou 34 de la plaque supérieure 18 et un trou associé 36 de la plaque inférieure 20.

Chaque paire de trous 34, 36 est prévue pour recevoir verticalement à fixation un corps tubulaire 38 appartenant aux moyens de support 14.

Le corps tubulaire 38 s'étend au-dessus de la plaque supérieure 18 et au-dessous de la plaque inférieure 20, et il est retenu verticalement sur la platine 12 par des moyens appropriés.

Une tige 40 verticale de support est insérée dans chaque corps tubulaire 38, de manière qu'elle puisse tourner autour de son axe vertical et de manière qu'elle puisse coulisser verticalement dans le corps tubulaire 38.

Chaque tige 40 verticale peut être munie, à l'une de ses extrémités, d'un moyen de préhension (non représenté) d'une préforme, et à l'autre extrémité, de moyens pour son entraînement en rotation tels qu'un pignon 42.

On décrit maintenant l'articulation 16 qui permet l'accouplement de la première platine 12A à la seconde platine 12B.

L'articulation 16 comporte une première douille 44 qui est montée à rotation autour d'un corps tubulaire 38 de la première platine 12A et une seconde douille 46 qui est montée à rotation autour d'un corps tubulaire 38 de la seconde platine 12B.

La première platine 12A peut donc pivoter, par rapport à la seconde platine 12B, autour d'un axe vertical d'articulation A3 passant par le corps tubulaire associé 38 de la seconde platine 12B.

De manière similaire, la seconde platine 12B peut pivoter, par rapport à la première platine 12A, autour d'un axe vertical d'articulation A4 passant par le corps tubulaire associé 38 de la première platine 12A.

La première douille 44 est montée à pivotement sur la seconde douille 46, autour de l'axe horizontal de pivotement A1.

A cet effet, la première douille 44 est munie d'un roulement 48 et la seconde douille 46 est assemblée sur la première douille 44 au moyen d'un rivet 50 horizontal qui s'étend axialement dans le roulement 48 de manière à former un arbre de pivotement.

De préférence, le rivet 50 est assemblé sur l'articulation 16 par bouterollage.

Conformément aux enseignements de l'invention, chaque platine 12A, 12B est réalisée en une seule pièce par moulage.

De préférence, on utilise un procédé de moulage par injection pour fabriquer les platines 12A, 12B, ce qui permet d'obtenir une bonne résistance des platines 12A, 12B aux sollicitations mécaniques et thermiques.

De préférence, le matériau constituant la platine est du Zamac ou un alliage cuivreux tel que du laiton.

On constate que l'obtention de platines 12A, 12B par injection sous pression permet de limiter le nombre d'usinages, voire de supprimer la nécessité de réaliser des usinages. En particulier, les platines 12A, 12B respectent plus facilement les tolérances dimensionnelles, de sorte qu'il n'est pas nécessaire de recourir à des étapes de rectification.

Avantageusement, chaque platine 12A, 12B est moulée sur son arbre 30 transversal. Chaque arbre 30 transversal est alors agencé comme un insert dans le moule de la platine 12A, 12B respective.

Cette caractéristique facilite le montage des arbres 30 sur les platines 12A, 12B, sans en fragiliser les structures.

De plus, dans les dispositifs de transfert selon l'état de la technique tels que celui décrit dans le document EP-B-0.935.572, on a constaté que les arbres transversaux supportant les galets, qui sont vissés dans le montant de la platine, ont tendance à se dévisser inopinément, notamment en raison des variations importantes de température, ce qui conduit à des dysfonctionnements du système de guidage des platines.

Le moulage des platines 12A, 12B sur les arbres 30 transversaux permet de remédier à cet inconvénient.

Avantageusement, les tronçons surmoulés des arbres 30 transversaux, c'est-à-dire les tronçons des arbres 30 qui sont reçus dans les tronçons tubulaires transversaux 26, 28 des montants 22, peuvent comporter des reliefs ou des cavités (non représentés) tels que des nervures ou des rainures, afin d'améliorer l'immobilisation des arbres 30 transversaux dans les platines 12A, 12B.

Selon une variante de réalisation (non représentée), l'arbre transversal 30 peut subir une étape de moletage avant d'être emmanché en force dans le montant 22 de la platine 12.

Selon une autre caractéristique de l'invention, chaque douille 44, 46 est réalisée en une seule pièce par moulage.

Avantageusement, les douilles 44, 46 sont moulées selon le même procédé de moulage par injection que les platines 12A, 12B et à partir des mêmes matériaux.

Grâce à l'emploi de douilles 44, 46 moulées, il est possible d'alléger la forme de chaque douille 44, 46 en n'agençant de la matière que dans les parties utiles.

Ainsi, selon un mode préféré de réalisation de l'invention, chaque douille 44, 46 est constituée de deux bagues coaxiales 52, 54 qui sont montées à rotation sur le corps tubulaire associé 38 et qui sont moulées avec une portion circonférentielle de paroi axiale 56.

Selon le mode de réalisation représenté ici, la première douille 44 comporte un corps cylindrique annulaire 58 coaxial à l'axe de pivotement A1 qui délimite un logement 60 prévu pour recevoir le roulement 48.

Du côté de la première platine 12A, le corps cylindrique 58 de la première douille 44 forme la portion circonférentielle de paroi axiale 56.

La portion circonférentielle de paroi axiale 56 de la seconde douille 46 comporte un trou 62 coaxial à l'axe de pivotement A1 qui est prévu pour recevoir un tronçon d'extrémité du rivet 50.

De préférence, les douilles 44, 46 moulées selon l'invention sont montées directement à rotation sur les corps tubulaires associés 38, sans élément intermédiaire d'interposition radiale.

Dans ce cas, il est souhaitable que les douilles 44, 46 soient réalisées en un matériau autolubrifiant, par exemple du laiton.

Ainsi, l'articulation 16 selon l'invention ne nécessite pas de bague intermédiaire comme dans les dispositifs de transferts selon l'état de la technique, ce qui facilite le montage des articulations 16 en diminuant le nombre de pièces nécessaires à la fabrication du dispositif de transfert 10.

De plus, l'absence de bague intermédiaire permet de réaliser une articulation 16 plus compacte, notamment en encombrement longitudinal, de sorte qu'il est possible de diminuer le pas longitudinal entre deux corps tubulaires 38, donc de diminuer le pas entre deux préformes qui se suivent dans la chaîne.

Selon une variante de réalisation (non représentée), l'articulation 16 peut être munie de cales qui sont interposées longitudinalement entre la première douille 44 et la seconde douille 46, en vue d'adapter la valeur du pas entre deux préformes en fonction de la taille des préformes. Les douilles 44, 46 de l'articulation 16 peuvent être usinées de manière adéquate, après le moulage, afin de permettre l'agencement des cales.

## Revendications

1. Dispositif de transfert (10), notamment de transfert de préformes pour la fabrication de récipients par soufflage, comportant une série de platines (12A, 12B) sur lesquelles sont fixés des moyens (14) de support de préformes, les platines (12A, 12B) étant accouplées les unes à la suite des autres en une chaîne sans fin curviligne mobile par l'intermédiaire d'articulations (16) propres à autoriser la curvilinéarité de la chaîne mobile ainsi que simultanément la rotation des platines (12A, 12B) autour d'un axe horizontal (A1) pour permettre le renversement et/ou le redressement des préformes, chaque platine (12A, 12B) ayant globalement la forme d'un maillon de chaîne et comportant une plaque horizontale supérieure (18) et une plaque horizontale inférieure (20) qui sont liées par au moins un montant sensiblement vertical (22), les moyens de support (14) comportant, pour chaque platine (12A, 12B), deux corps tubulaires (38) qui sont fixés sur la platine (12A, 12B), de part et d'autre du montant (22), et qui s'étendent verticalement à travers des trous (34, 36) associés formés dans les deux plaques horizontales (18, 20), chaque corps tubulaire (38) étant prévu pour recevoir intérieurement une tige verticale (40) de support d'une préforme, et chaque platine (12A, 12B), dite première platine (12A), étant liée à une platine adjacente, dite seconde platine (12B), par une articulation (16) comportant une première douille (44) montée à rotation autour d'un corps tubulaire (38) de la première platine (12A) et une seconde douille (46) montée à rotation autour d'un corps tubulaire (38) de la seconde platine (12B), les deux douilles (44, 46) étant montées à pivotement, l'une par rapport à l'autre, autour d'un axe de pivotement sensiblement horizontal (A1), **caractérisé en ce que** chaque platine (12A, 12B) est réalisée en une seule pièce par moulage.

2. Dispositif (10) selon la revendication précédente, **caractérisé en ce que** le montant (22) vertical de chaque platine (12A, 12B) comporte au moins un arbre (30) transversal qui est muni, à son extrémité libre, d'un galet (32) fou prévu pour coopérer avec une came fixe, notamment en vue de commander le renversement et/ou le redressement des préformes.

3. Dispositif (10) selon la revendication précédente, **caractérisé en ce que** chaque platine (12A, 12B) est moulée sur l'arbre (30) transversal associé qui forme un insert.

4. Dispositif (10) selon la revendication précédente, **caractérisé en ce que** les tronçons de l'arbre (30) transversal qui sont surmoulés comportent des reliefs ou des cavités.

5. Dispositif (10) selon la revendication 2, **caractérisé en ce que** l'arbre (30) transversal est monté à force dans la platine (12A, 12B) associée.

6. Dispositif (10) selon la revendication précédente, **caractérisé en ce que** les tronçons de l'arbre (30) qui sont reçus dans la platine (12A, 12B) comportent des stries réalisées par moletage.

7. Dispositif (10) selon l'une quelconque des revendications 1 à 6, **caractérisé en ce que** chaque douille (44, 46) est réalisée en une seule pièce par moulage.

8. Dispositif (10) selon la revendication précédente, **caractérisé en ce que** chaque douille (44, 46) est constituée de deux bagues coaxiales (52, 54) qui sont montées à rotation sur le corps tubulaire associé (38) et qui sont moulées avec une portion circonférentielle de paroi axiale (56).

9. Dispositif (10) selon la revendication précédente, **caractérisé en ce que** la portion de paroi axiale (56) de la première douille (44) est munie d'un roulement (48) et **en ce que** la portion de paroi axiale (56) de la seconde douille (46) est assemblée sur la portion de paroi axiale (56) de la première douille (44) au moyen d'un rivet (50) horizontal qui s'étend axialement dans le roulement (48) de manière à former l'axe de pivotement (A1).

10. Dispositif (10) selon l'une quelconque des revendications 7 à 9, **caractérisé en ce que** chaque douille (44, 46) est montée directement à rotation sur le corps tubulaire associé (38), sans élément intermédiaire d'interposition radiale.

11. Dispositif (10) selon la revendication précédente, **caractérisé en ce que** chaque douille (44, 46) est réalisée en matériau autolubrifiant tel que du laiton.

12. Dispositif (10) selon l'une quelconque des revendications précédentes, **caractérisé en ce que** chaque platine (12A, 12B) et/ou chaque douille (44, 46) est moulée par injection sous pression.

13. Dispositif (10) selon l'une quelconque des revendications précédentes, **caractérisé en ce que** chaque platine (12A, 12B) et/ou chaque douille (44, 46) est réalisée en Zamac.

14. Dispositif (10) selon l'une quelconque des revendications 1 à 12, **caractérisé en ce que** chaque platine (12A, 12B) et/ou chaque douille (44, 46) est réalisée en alliage cuivreux.

## Claims

1. Transfer device (10), particularly for transferring preforms for the manufacture of receptacles by blow-moulding, comprising a series of plates (12A, 12B) to which are attached means (14) of supporting preforms, the plates (12A, 12B) being coupled one after the other in an endless movable curvilinear chain by means of articulations (16) capable of allowing the curvilinearity of the movable chain and simultaneously the rotation of the plates (12A, 12B) about a horizontal axis (A1) to allow the preforms to be turned upside down and/or set upright, each plate (12A, 12B) generally having the shape of a chain link and comprising a top horizontal plate (18) and a bottom horizontal plate (20) that are connected by at least one substantially vertical upright (22), the means of support (14) comprising, for each plate (12A, 12B), two tubular bodies (38) that are attached to the plate (12A, 12B), either side of the upright (22), and that extend vertically through associated holes (34, 36) formed in the two horizontal plates (18, 20), each tubular body (38) being designed to receive internally a vertical rod (40) for supporting a preform, and each plate (12A, 12B), called the first plate (12A), being connected to an adjacent plate, called the second plate (12B), via an articulation (16) comprising a first socket (44) mounted so as to rotate about a tubular body (38) of the first plate (12A) and a second socket (46) mounted so as to rotate about a tubular body (38) of the second plate (12B), the two sockets (44, 46) being mounted so as to pivot one relative to the other about a substantially horizontal pivot axis (A1), **characterized in that** each plate (12A, 12B) is made in a single piece by moulding.

2. Device (10) according to the preceding claim, **characterized in that** the vertical upright (22) of each plate (12A, 12B) comprises at least one transverse shaft (30) that is furnished, at its free end, with an idler wheel (32) designed to interact with a fixed cam, particularly in order to control the turning upside down and/or the setting upright of the preforms.

3. Device (10) according to the preceding claim, **characterized in that** each plate (12A, 12B) is moulded onto the associated transverse shaft (30) that forms an insert.

4. Device (10) according to the preceding claim, **characterized in that** the sections of the transverse shaft (30) that are overmoulded comprise raised elements or cavities.

5. Device (10) according to Claim 2, **characterized in that** the transverse shaft (30) is force-fitted into the associated plate (12A, 12B).

6. Device (10) according to the preceding claim, **characterized in that** the sections of the shaft (30) that are received in the plate (12A, 12B) comprise grooves made by knurling.

7. Device (10) according to any one of Claims 2 to 7, **characterized in that** each socket (44, 46) is made in a single piece by moulding.

8. Device (10) according to the preceding claim, **characterized in that** each socket (44, 46) consists of two coaxial rings (52, 54) that are mounted so as to rotate on the associated tubular body (38) and that are moulded with a circumferential portion of axial wall (56).

9. Device (10) according to the preceding claim, **characterized in that** the portion of axial wall (56) of the first socket (44) is furnished with a bearing (48) and **in that** the portion of axial wall (56) of the second socket (46) is assembled onto the portion of axial wall (56) of the first socket (44) by means of a horizontal rivet (50) which extends axially in the bearing (48) in order to form the pivot axis (A1).

10. Device (10) according to any one of Claims 8 to 10, **characterized in that** each socket (44, 46) is mounted so as to rotate directly on the associated tubular body (38), with no intermediate element of radial interposition.

11. Device (10) according to the preceding claim, **characterized in that** each socket (44, 46) is made of self-lubricating material such as brass.

12. Device (10) according to any one of the preceding claims, **characterized in that** each plate (12A, 12B) and/or each socket (44, 46) is pressure injection moulded.

13. Device (10) according to any one of the preceding claims, **characterized in that** each plate (12A, 12B) and/or each socket (44, 46) is made of Zamac.

14. Device (10) according to any one of Claims 1 to 12, **characterized in that** each plate (12A, 12B) and/or each socket (44, 46) is made of copper alloy.

## Patentansprüche

1. Übertragungsvorrichtung (10), insbesondere zur Übertragung von Vorformlingen für die Herstellung von Behältern durch Blasformen, welche eine Reihe von Platten (12A, 12B) aufweist, auf welchen die Mittel (14) zum Tragen der Vorformlinge befestigt sind, wobei die Platten (12A, 12B) nacheinander als endlose Kette verbunden sind, die kurvilinear beweglich ist mittels Gelenken (16), welche die Kurvilinearität der beweglichen Kette sowie gleichzeitig die Rotation der Platten (12A, 12B) um eine horizontale Achse (A1) ermöglichen, um das Umkippen und/oder Wiederaufrichten der Vorformlinge zu ermöglichen, wobei jede Platte (12A, 12B) im Allgemeinen die Form eines Kettenglieds hat und eine obere horizontale Scheibe (18) und eine untere horizontale Scheibe (20) aufweist, die mittels wenigstens einer im Wesentlichen vertikalen Stütze (22) verbunden sind, wobei die Mittel zum Tragen (14) für jede Platte (12A, 12B) zwei rohrförmige Körper (38) aufweisen, die an der Platte (12A, 12B) auf beiden Seiten der Stütze (22) befestigt sind und die sich vertikal durch zugeordnete Löcher (34, 36) erstrecken, welche in den beiden horizontalen Scheiben (18, 20) gebildet sind, wobei jeder rohrförmige Körper (38) vorgesehen ist, um innen eine vertikale Stange (40) zum Tragen eines Vorformlings aufzunehmen, und jede Platte (12A, 12B), erste Platte (12A) genannt, mit einer benachbarten Platte, zweite Platte (12B) genannt, durch ein Gelenk (16) verbunden ist, das eine erste Hülse (44) aufweist, die in Rotation um einen rohrförmigen Körper (38) der ersten Platte (12A) angebracht ist, sowie eine zweite Hülse (46), die in Rotation um einen rohrförmigen Körper (38) der zweiten Platte (12B) angebracht ist, wobei die beiden Hülsen (44, 46) bezogen aufeinander um eine im Wesentlichen horizontale Schwenkachse (A1) schwenkbar sind, **dadurch gekennzeichnet, dass** jede Platte (12A, 12B) durch Gießen in einem einzigen Stück hergestellt ist.

2. Vorrichtung (10) gemäß dem vorausgegangenen Anspruch, **dadurch gekennzeichnet, dass** die vertikale Stütze (22) jeder Platte (12A, 12B) wenigstens eine Querwelle (30) aufweist, die an ihrem freien Ende mit einer Laufrolle (32) ausgestattet ist, die vorgesehen ist, mit einem feststehenden Nocken zusammenzuwirken, insbesondere um das Umkippen und Wiederaufrichten der Vorformlinge zu steuern.

3. Vorrichtung (10) gemäß dem vorausgegangenen Anspruch, **dadurch gekennzeichnet, dass** jede Platte (12A, 12B) auf die zugeordnete Querwelle (30) gegossen wird, die einen Einsatz bildet.

4. Vorrichtung (10) gemäß dem vorausgegangenen Anspruch, **dadurch gekennzeichnet, dass** die Stücke der Querwelle (30), die umgossen sind, Reliefs oder Vertiefungen aufweisen.

5. Vorrichtung (10) gemäß Anspruch 2, **dadurch gekennzeichnet, dass** die Querwelle (30) mit Kraft in der zugeordneten Platte (12A, 12B) angebracht wird.

6. Vorrichtung (10) gemäß dem vorausgegangenen Anspruch, **dadurch gekennzeichnet, dass** die Stücke der Welle (30), die in der Platte (12A, 12B) aufgenommen sind, durch Rändeln hergestellte Riefen aufweisen.

7. Vorrichtung (10) gemäß einem der vorausgegangenen Ansprüche 1 bis 6, **dadurch gekennzeichnet, dass** jede Hülse (44, 46) durch Gießen in einem Stück hergestellt wird.

8. Vorrichtung (10) gemäß dem vorausgegangenen Anspruch, **dadurch gekennzeichnet, dass** jede Hülse (44, 46) aus zwei koaxialen Buchsen (52, 54) gebildet ist, die in Rotation auf dem zugeordneten rohrförmigen Körper (38) angebracht sind und die mit einem Umfangsbereich als axiale Wand (56) gegossen sind.

9. Vorrichtung (10) gemäß dem vorausgegangenen Anspruch, **dadurch gekennzeichnet, dass** der Bereich der axialen Wand (56) der ersten Hülse (44) mit einem Wälzlager (48) ausgestattet ist, und **dadurch**, dass der Bereich der axialen Wand (56) der zweiten Hülse (46) auf dem Bereich der axialen Wand (56) der ersten Hülse (44) mittels eines horizontalen Niets (50) zusammengebaut ist, der sich axial in dem Wälzlager (48) erstreckt, um die Schwenkachse (A1) zu bilden.

10. Vorrichtung (10) gemäß einem der Ansprüche 7 bis 9, **dadurch gekennzeichnet, dass** jede Hülse (44, 46) direkt in Rotation ohne zwischenliegendes Element zur radialen Einfügung auf dem zugeordneten rohrförmigen Körper (38) angebracht ist.

11. Vorrichtung (10) gemäß dem vorausgegangenen Anspruch, **dadurch gekennzeichnet, dass** jede Hülse (44, 46) aus einem selbstschmierenden Material, wie beispielsweise Messing, hergestellt ist.

12. Vorrichtung (10) gemäß einem der vorausgegangenen Ansprüche, **dadurch gekennzeichnet, dass** jede Platte (12A, 12B) und/oder jede Hülse (44, 46) durch Verpressen gegossen ist.

13. Vorrichtung (10) gemäß einem der vorausgegangenen Ansprüche, **dadurch gekennzeichnet, dass** jede Platte (12A, 12B) und/oder jede Hülse (44, 46) aus Zamak hergestellt ist.

14. Vorrichtung (10) gemäß einem der vorausgegangenen Ansprüche 1 bis 12, **dadurch gekennzeichnet, dass** jede Platte (12A, 12B) und/oder jede Hülse (44, 46) aus einer Kupferlegierung hergestellt ist.
